# FASCICULE DE BREVET EUROPEEN

(11) **EP 1 464 804 B1**
(45) Date de publication et mention de la délivrance du brevet: **29.11.2006**
(21) Numéro de dépôt: 04300061.1
(22) Date de dépôt: 04.02.2004
(51) Int. Cl.: F02B 19/18, F02B 19/12, F02B 23/10

(54) **Moteur à combustion interne à préchambre et allumage commandé**
Fremdgezündete Brennkraftmaschine mit Vorkammer
Internal combustion engine having pre-chamber and spark ignition

(30) Priorité: 04.04.2003 FR 0304237
(43) Date de publication de la demande: 06.10.2004
(73) Titulaire: Peugeot Citroën Automobiles S.A., 78140 Vélizy Villacoublay (FR)
(72) Inventeur: Robinet, Cyril, 91430 Igny (FR)
(74) Mandataire: De Cuenca, Emmanuel Jaime

(56) Documents cités:
- EP-A- 1 207 285
- WO-A-98/45588
- DE-A- 1 526 290
- FR-A- 2 781 840
- US-A- 5 992 364
- US-A1- 2002 020 388
- US-A1- 2002 026 923
- PATENT ABSTRACTS OF JAPAN vol. 004, no. 045 (M-006), 9 avril 1980 (1980-04-09) -& JP 55 014956 A (TOYOTA MOTOR CORP), 1 février 1980 (1980-02-01)

## Description

L'invention se rapporte à un moteur à combustion interne à préchambre et à allumage commandé.

L'invention concerne plus particulièrement un moteur à combustion interne à allumage commandé comprenant au moins un cylindre, une culasse obturant le cylindre, un piston monté coulissant dans le cylindre, une chambre de combustion définie dans le cylindre entre une face supérieure du piston et une face inférieure de la culasse, des moyens d'injection de carburant ou d'un mélange air-carburant dans la chambre de combustion, des moyens d'allumage destinés à produire une inflammation du mélange air-carburant dans la chambre de combustion, les moyens d'allumage comportant un générateur d'étincelle disposé dans une préchambre délimitée par une paroi, la préchambre communicant avec la chambre de combustion par l'intermédiaire d'au moins un orifice formé dans la paroi.

Un tel moteur est connu notamment du document FR2781840.

Si ce type de moteur a un fonctionnement globalement satisfaisant, notamment pour inhiber le phénomène de cliquetis pour un fonctionnement à forte charge, on observe toutefois des instabilités de combustion pour un fonctionnement à faible charge, notamment lors du fonctionnement dit "au ralenti" du moteur.

Le document US 5, 992, 364 décrit quant à lui un moteur à injection directe comprenant une bougie et un injecteur débouchant dans la chambre de combustion.

La bougie est entourée d'un manchon cylindrique ouvert à une extrémité et comprenant par ailleurs un orifice latéral. Le manchon forme un écran entre l'injecteur et la bougie pour protéger cette dernière notamment lorsque le moteur fonctionne en mode stratifié, c'est à dire avec une concentration de carburant plus élevé à proximité du point d'étincelle.

Le document EP 1 207 285 A1 décrit un moteur à préchambre dans lequel l'injecteur et la bougie débouchent dans la préchambre. La préchambre communique avec la chambre principale au moyen d'orifices conformés pour permettre d'une part à des premiers jets de carburant de transiter directement dans la chambre principale et, d'autre part, le confinement de seconds jets de carburant au sein de la préchambre. La pression du carburant injecté est de 490 bars.

Un but de la présente invention est de pallier tout ou partie des inconvénients de l'art antérieur relevés ci-dessus et de proposer un moteur à combustion interne à préchambre et allumage commandé ayant un fonctionnement amélioré par rapport à l'art antérieur.

A cette fin, le moteur à combustion interne à allumage commandé selon l'invention, est caractérisé en ce que les moyens d'injection sont conformés pour injecter le carburant dans la chambre de combustion à une pression d'au moins 250 bars de façon à former un mélange air essence et à favoriser la pénétration d'une partie de ce mélange à l'intérieur de la préchambre, et au moins un orifice a un diamètre de passage inférieur à 1 mm ne permettant pas le passage d'un front de flamme de la préchambre vers la chambre de combustion, mais permettant le passage d'éléments instables résultant de la combustion dans la préchambre afin de permettre une auto-inflammation du mélange air-carburant de la chambre de combustion, et au moins un autre orifice a un diamètre compris entre 1 et 3 mm permettant le passage d'un front de flamme de la préchambre vers la chambre de combustion.

L'invention peut comporter des caractéristiques suivantes :
- la paroi de la préchambre est constituée d'un matériau ayant une conductivité thermique supérieure à 10W/K/m,
- la paroi de la préchambre est constituée d'un alliage de Cuivre,
- les moyens d'injection et les moyens d'allumage sont disposés relativement de sorte que la paroi de la préchambre se trouve au moins en partie sur le trajet du carburant injecté par les moyens d'injection, de façon à mouiller au moins en partie la paroi de la préchambre de carburant lors d'une injection de carburant dans la chambre de combustion,
- au moins dans une plage de fonctionnement du moteur la quantité de carburant délivrée par les moyens d'injection pour un cycle de combustion est fractionnée sous la forme d'une pluralité d'injections partielles et distinctes,
- au moins une des injections partielles est délivrée avant l'inflammation de la charge dans la chambre de combustion par le moyen d'allumage, et au moins une injection partielle est délivrée après cette inflammation,
- le carburant est de l'essence.
- la pression du carburant injecté est comprise entre 500 et 2500 bars.

D'autres particularités et avantages apparaîtront à la lecture de la description ci-après, faite en référence aux figures dans lesquelles :
- la figure 1 représente une vue en coupe, schématique et partielle, d'un moteur à combustion interne selon l'invention lors d'un premier instant d'un cycle de combustion,
- les figures 2 à 4 représentent des vues analogues à celle de la figure 1, lors respectivement de trois autres instants ultérieurs du cycle de combustion,
- la figure 5 représente une vue partiellement en coupe, schématique et agrandie, d'un détail du moteur de la figure 1, illustrant les moyens d'allumage du moteur,
- la figure 6 représente une vue de dessous des moyens d'allumage de la figure 5, illustrant une paroi délimitant les moyens d'allumage.

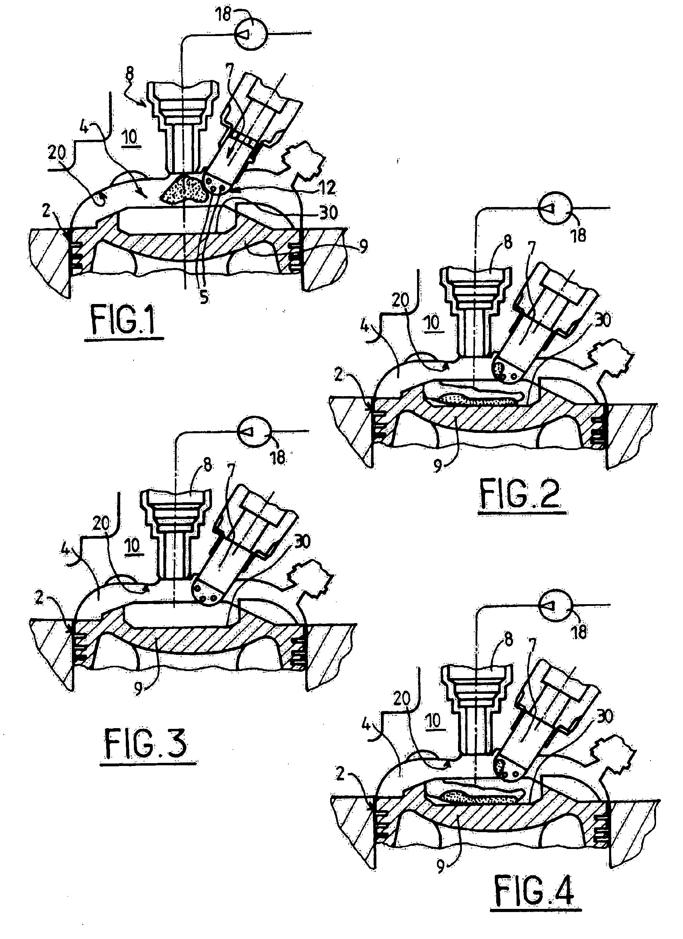

Le moteur à combustion interne représenté aux figures 1 à 4 comporte au moins un cylindre 2, une culasse 10 obturant le cylindre 2 et un piston 9 monté coulissant dans le cylindre 2.

Une chambre 4 de combustion est ainsi définie dans le cylindre 2 entre une face supérieure 30 du piston 9 et une face inférieure 20 de la culasse 10. La face supérieure 30 du piston 9 peut former une cavité destinée à confiner le carburant.

Le moteur comporte des moyens 8, 18 d'injection de carburant dans la chambre 4 de combustion, constitués, par exemple, d'un injecteur 8 alimenté en carburant par une pompe 18 d'injection. Comme représenté, l'injecteur 8 peut être disposé sensiblement selon l'axe de symétrie longitudinal du cylindre 2.

Des moyens 7 d'allumage destinés à produire une inflammation du mélange air-carburant dans la chambre 4 de combustion sont disposés de manière adjacente à l'injecteur 8.

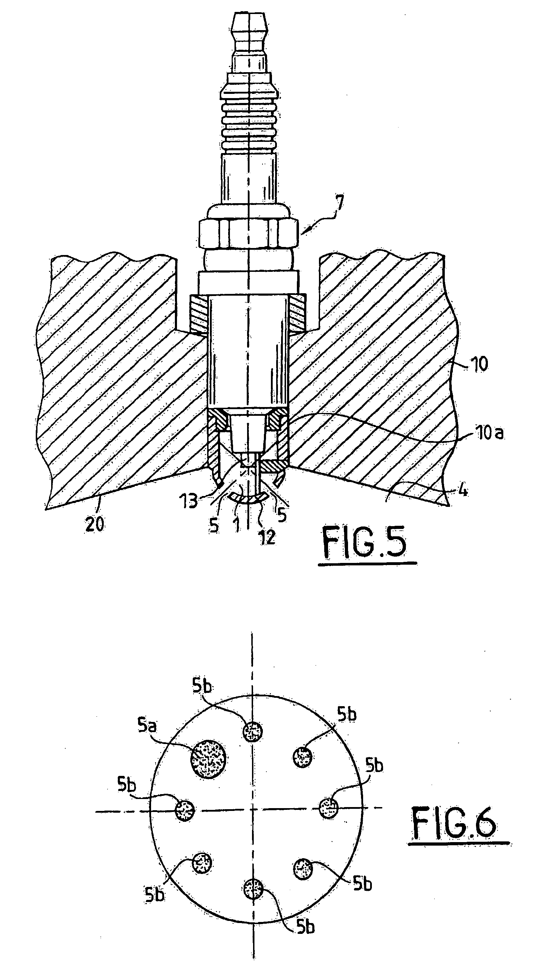

Les moyens 7 d'allumage comportent un générateur 13 d'étincelle, tel qu'une bougie, disposé dans une préchambre 1 (figure 5).

Au moins dans sa partie tournée vers la chambre 4 de combustion, la préchambre 1 est délimitée par une paroi 12. La préchambre 1 communique avec la chambre 4 de combustion par l'intermédiaire d'au moins un orifice 5 et de préférence plusieurs orifices, formés dans la paroi 12.

Selon l'invention, les moyens d'injection 8, 18 sont conformés pour injecter le carburant dans la chambre 4 de combustion à une pression d'au moins 250 bars, de façon à former un mélange air essence apte à pénétrer à l'intérieur de la préchambre 1.

La pulvérisation, l'atomisation et l'évaporation du carburant injecté sont améliorées selon l'invention, ce qui assure un meilleur transit de carburant de la chambre 4 de combustion vers la préchambre 1.

Le mélange air-carburant amené dans la préchambre 1 possède donc une richesse et une aptitude à l'inflammation améliorée par rapport à l'art antérieur. La combustion du moteur selon l'invention est donc améliorée.

L'injection selon l'invention a par ailleurs une durée plus courte pour une même quantité de carburant injecté, qui permet une injection plus tardive au cours d'un cycle de combustion, ou une injection à un moment plus précis du cycle.

Dans l'exemple de réalisation représenté à la figure 6, la paroi 12 de la préchambre 1 possède 8 orifices.

Un 5a des orifices a des dimensions de passage permettant le passage d'un front de flamme de la préchambre 1 vers la chambre 4 de combustion. Les autres orifices 5b ont des dimensions de passage ne permettant pas le passage d'un front de flamme de la préchambre 1 vers la chambre 4 de combustion, mais permettant le passage d'éléments instables résultant de la combustion dans la préchambre 1 afin de permettre une auto-inflammation du mélange air-carburant de la chambre 4 de combustion.

Un orifice ne laissant passer que des éléments instables (et pas un front de flamme) a un diamètre de passage inférieur à 1 mm. Un orifice 5a laissant passer un front de flamme a un diamètre compris entre 1 et 3 mm.

De préférence, les orifices 5 ont une longueur inférieure à leur diamètre.

De préférence également, la paroi 12 de la préchambre 1 est constituée d'un matériau ayant une conductivité thermique supérieure à 10W/K/m et de préférence supérieure à 30W/K/m. Par exemple, la paroi 12 de la préchambre 1 est constituée d'un alliage de Cuivre à conductivité élevée du type CuCr1Zr.

Selon une autre caractéristique préférable de l'invention, l'injecteur 8 et le moyen 7 d'allumage sont disposés relativement de façon que la paroi 12 de la préchambre 1 se trouve au moins en partie sur le trajet direct du carburant peu après sa sortie de l'injecteur 8 (figure 1). De cette manière, l'injecteur 8 vient mouiller au moins en partie la paroi 12 de la préchambre 1 de carburant lors d'une injection de carburant dans la chambre 4 de combustion (figure 2).

Le mode d'injection selon l'invention favorise une vaporisation plus importante et plus rapide du carburant mouillant la paroi 12 (figure 2), ainsi qu'une meilleure alimentation de la préchambre 1 en carburant (figure 3 : remontée de vapeur de carburant dans la préchambre pendant la phase de compression notamment).

L'inflammation ultérieure du mélange dans la préchambre 1 par la bougie 13 est ainsi améliorée, de même que le passage de front de flamme et/ou de composés instables de la préchambre 1 vers la chambre 4 de combustion. Une meilleure combustion du mélange air-carburant dans la chambre 4 de combustion est ainsi obtenue (figure 4).

Selon l'invention, la pression du carburant fournie à l'injecteur 8 est comprise de préférence entre 250 et 2500 bars. Cette injection à haute pression permet une meilleure atomisation du mélange air-carburant et une meilleure homogénéisation de la charge, notamment lorsque la pression du carburant injectée atteint ou excède 500 bars.

Cette meilleure atomisation de la charge augmente également le refroidissement de la charge air-carburant du fait de la chaleur latente de vaporisation du mélange au court de l'atomisation. Ceci contribue à améliorer la combustion de la charge et permet d'éviter que les gaz d'échappement n'atteignent des températures trop élevées, susceptibles d'endommager des dispositifs tels que des turbines de turbo-compresseur ou des dispositifs de traitement des gaz d'échappement.

Selon l'invention également, la quantité de carburant délivrée par les moyens d'injection pour un cycle de combustion peut être fractionnée sous la forme d'une pluralité d'injections partielles et distinctes. Par exemple, une première injection peut être prévue pour faire pénétrer du carburant dans la préchambre 1. La ou les injections ultérieures peuvent être réalisées avant et/ou pendant et/ou après l'allumage de la charge dans la préchambre 1. Ce mode d'injection améliore encore le rendement de la combustion.

Dans une forme de réalisation avantageuse, le carburant est de l'essence.

## Revendications

1. Moteur à combustion interne à allumage commandé comprenant au moins un cylindre (2), une culasse (10) obturant le cylindre (2), un piston (9) monté coulissant dans le cylindre (2), une chambre (4) de combustion définie dans le cylindre (2) entre une face supérieure (30) du piston (9) et une face inférieure (20) de la culasse (10), des moyens (8, 18) d'injection de carburant ou d'un mélange air-carburant dans la chambre (4) de combustion, des moyens (7) d'allumage destinés à produire une inflammation du mélange air-carburant dans la chambre (4) de combustion, les moyens (7) d'allumage comportant un générateur (13) d'étincelle disposé dans une préchambre (1) délimitée par une paroi (12), la préchambre (1) communicant avec la chambre (4) de combustion par l'intermédiaire d'au moins deux orifices (5) formés dans la paroi (12), **caractérisé en ce que** au moins un orifice (5) a un diamètre de passage compris entre 1 et 3 mm permettant le passage d'un front de flamme de la préchambre (1) vers la chambre (4) de combustion, et au moins un autre orifice (5b) a un diamètre inférieur à 1 mm ne permettant pas le passage d'un front de flamme de la préchambre (1) vers la chambre (4) de combustion mais permettant le passage d'éléments instables résultant de la combustion dans la préchambre (1) afin de permettre une auto-inflammation du mélange air-carburant dans la chambre (4) de combustion, les moyens (8, 18) d'injection étant conformés pour injecter le carburant dans la chambre de combustion (4) à une pression d'au moins 250 bars de façon à former un mélange air essence et à favoriser la pénétration d'une partie de ce mélange à l'intérieur de la préchambre (1) via le ou les orifices (5).

2. Moteur selon la revendication 1, **caractérisé en ce que** la paroi (12) de la préchambre (1) comporte une pluralité d'orifices (5).

3. Moteur selon l'une quelconque des revendications précédentes, **caractérisé en ce que** la paroi (12) de la préchambre (1) est constituée d'un matériau ayant une conductivité thermique supérieure à 10W/K/m.

4. Moteur selon l'une quelconque des revendications précédentes, **caractérisé en ce que** la paroi (12) de la préchambre (1) est constituée d'un alliage de Cuivre.

5. Moteur selon l'une quelconque des revendications précédentes, **caractérisé en ce que** les moyens (8, 18) d'injection et les moyens (7) d'allumage sont disposés relativement de sorte que la paroi (12) de la préchambre (1) se trouve au moins en partie sur le trajet du carburant injecté par les moyens (8, 18) d'injection, de façon à mouiller au moins en partie la paroi (12) de la préchambre (1) de carburant lors d'une injection de carburant dans la chambre (4) de combustion.

6. Moteur selon l'une quelconque des revendications précédentes, **caractérisé en ce que**, au moins dans une plage de fonctionnement du moteur, la quantité de carburant délivrée par les moyens (8, 18) d'injection pour un cycle de combustion est fractionnée sous la forme d'une pluralité d'injections partielles et distinctes.

7. Moteur selon la revendication 9, **caractérisé en ce qu'**au moins une des injections partielles est délivrée avant l'inflammation de la charge dans la chambre de combustion (4) par le moyen d'allumage (7), et au moins une injection partielle est délivrée après cette inflammation.

8. Moteur selon l'une quelconque des revendications précédentes, **caractérisé en ce que** le carburant est de l'essence.

9. Moteur selon l'une quelconque des revendications précédentes, **caractérisé en ce que** la pression du carburant injecté est comprise entre 500 et 2500 bars.

## Claims

1. Internal combustion engine with spark ignition comprising at least one cylinder (2), a cylinder head (10) sealing the cylinder (2), a piston (9) mounted so as to slide in the cylinder (2), a combustion chamber (4) defined in the cylinder (2) between an upper face (30) of the piston (9) and a lower face (20) of the cylinder head (10), means (8, 18) for injecting fuel or an air-fuel mixture into the combustion chamber (4), ignition means (7) intended to ignite the air-fuel mixture in the combustion chamber (4), the ignition means (7) comprising a spark generator (13) arranged in a prechamber (1) delimited by a wall (12), the prechamber (1) communicating with the combustion chamber (4) via at least two ports (5) formed in the wall (12), **characterised in that** at least one port (5) has a port diameter comprised between 1 and 3 mm allowing a flame front to pass from the prechamber (1) to the combustion chamber (4) and at least one other port (5b) has a diameter of less than 1 mm not allowing a flame front to pass from the prechamber (1) to the combustion chamber (4), but allowing unstable elements resulting from combustion to pass into the prechamber (1) in order to allow self-ignition of the air-fuel mixture in the combustion chamber (4), the injection means (8, 18) being shaped for injecting fuel into the combustion chamber (4) at a pressure of at least 250 bars so as to form an air-petrol mixture and to encourage part of this mixture to penetrate inside the prechamber (1) via the port(s) (5).

2. Engine according to Claim 1, **characterised in that** the wall (12) of the prechamber (1) comprises a plurality of ports (5).

3. Engine according to any one of the preceding claims, **characterised in that** the wall (12) of the prechamber (1) is made of a material having a thermal conductivity greater than 10 W/K/m.

4. Engine according to any one of the preceding claims, **characterised in that** the wall (12) of the prechamber (1) is made of a Copper alloy.

5. Engine according to any one of the preceding claims, **characterised in that** the injection means (8, 18) and the ignition means (7) are arranged relatively so that the wall (12) of the prechamber (1) is located at least partly on the path of the fuel injected by the injection means (8, 18), so as to moisten the wall (12) of the prechamber (1) at least partly with fuel when fuel is injected into the combustion chamber (4).

6. Engine according to any one of the preceding claims, **characterised in that**, at least in a working range of the engine, the quantity of fuel delivered by the injection means (8, 18) for a combustion cycle is divided up in the form of a plurality of partial and distinct injections.

7. Engine according to Claim 6, **characterised in that** at least one of the partial injections is delivered before ignition of the charge in the combustion chamber (4) by the ignition means (7), and at least a partial injection is delivered after this ignition.

8. Engine according to any one of the preceding claims, **characterised in that** the fuel is petrol.

9. Engine according to any one of the preceding claims, **characterised in that** the pressure of the injected fuel is comprised between 500 and 2500 bars.

## Patentansprüche

1. Verbrennungsmotor mit Fremdzündung mit mindestens einem Zylinder (2), einem Zylinderkopf (10), der den Zylinder (2) verschließt, einem Kolben (9), der im Zylinder (2) verschiebbar montiert ist, einer Brennkammer (4), die im Zylinder (2) zwischen einer oberen Fläche (30) des Kolbens (9) und einer unteren Fläche (20) des Zylinderkopfs (10) festgelegt ist, Mitteln (8, 18) zum Einspritzen von Kraftstoff oder einem Kraftstoff-Luft-Gemisch in die Brennkammer (4), Zündungsmitteln (7) zum Entzünden des Kraftstoff-Luft-Gemischs in der Brennkammer (4), wobei die Zündungsmittel (7) einen Funkenerzeuger (13) aufweisen, der in einer Vorkammer (1) angeordnet ist, die von einer Wand (12) begrenzt ist und mit der Brennkammer (4) über mindestens zwei Öffnungen (5) in der Wand (12) in Verbindung steht, **dadurch gekennzeichnet, dass** mindestens eine Öffnung (5) einen Durchlassdurchmesser zwischen 1 und 3 Millimeter aufweist, der den Durchgang einer Flammenfront von der Vorkammer (1) in die Brennkammer (4) erlaubt, und mindestens eine weitere Öffnung (5b) einen Durchmesser aufweist, der kleiner ist als 1 Millimeter und den Durchgang einer Flammenfront von der Vorkammer (1) in die Brennkammer (4) nicht erlaubt, dafür aber den Durchgang instabiler Elemente aus der Verbrennung in der Vorkammer (1), um eine Selbstzündung des Kraftstoff-Luft-Gemischs in der Brennkammer (4) zu ermöglichen, wobei die Einspritzmittel (8, 18) so ausgebildet sind, dass sie den Kraftstoff mit einem Druck von mindestens 250 bar in die Brennkammer (4) spritzen, sodass ein Benzin-Luft-Gemisch gebildet und das Eindringen eines Teils dieses Gemischs über die Öffnung/en (5) in die Vorkammer (1) begünstigt wird.

2. Motor nach Anspruch 1, **dadurch gekennzeichnet, dass** die Wand (12) der Vorkammer (1) mehrere Öffnungen (5) aufweist.

3. Motor nach einem der vorhergehenden Ansprüche, **dadurch gekennzeichnet, dass** die Wand (12) der Vorkammer (1) aus einem Material mit einer Wärmeleitfähigkeit größer 10 W/Km besteht.

4. Motor nach einem der vorhergehenden Ansprüche, **dadurch gekennzeichnet, dass** die Wand (12) der Vorkammer (1) aus einer Kupferlegierung besteht.

5. Motor nach einem der vorhergehenden Ansprüche, **dadurch gekennzeichnet, dass** die Einspritzmittel (8, 18) und die Zündungsmittel (7) derart zueinander angeordnet sind, dass sich die Wand (12) der Vorkammer (1) zumindest teilweise auf dem Weg des von den Einspritzmitteln (8, 18) eingespritzten Kraftstoffs befindet, sodass die Wand (12) der Vorkammer (1) beim Einspritzen von Kraftstoff in die Brennkammer (4) zumindest teilweise mit Kraftstoff benetzt wird.

6. Motor nach einem der vorhergehenden Ansprüche, **dadurch gekennzeichnet, dass** zumindest in einem Betriebsbereich des Motors die von den Einspritzmitteln (8, 18) für einen Verbrennungszyklus gelieferte Kraftstoffmenge in mehrere verschiedene Teileinspritzungen aufgeteilt wird.

7. Motor nach Anspruch 6, **dadurch gekennzeichnet, dass** mindestens eine der Teileinspritzungen vor und mindestens eine Teileinspritzung nach dem Entzünden der Ladung durch das Zündungsmittel (7) in der Brennkammer (4) erfolgt.

8. Motor nach einem der vorhergehenden Ansprüche, **dadurch gekennzeichnet, dass** der Kraftstoff Benzin ist.

9. Motor nach einem der vorhergehenden Ansprüche, **dadurch gekennzeichnet, dass** der Druck des eingespritzten Kraftstoffs zwischen 500 und 2500 bar liegt.
